(19) Europäisches Patentamt
European Patent Office
Office européen des brevets

(11) **EP 2 696 175 B1**

(12) **EUROPÄISCHE PATENTSCHRIFT**

(45) Veröffentlichungstag und Bekanntmachung des Hinweises auf die Patenterteilung:
**15.09.2021 Patentblatt 2021/37**

(51) Int Cl.:
*G01F 1/80* *(2006.01)*         *G01F 1/86* *(2006.01)*
*F04B 49/00* *(2006.01)*

(21) Anmeldenummer: **12179568.6**

(22) Anmeldetag: **07.08.2012**

(54) **Verfahren zum Erfassen der Durchflussmenge einer Kreiselpumpe**

Method for detecting the flow rate of a centrifugal pump

Procédé de détection du débit d'une pompe à centrifuge

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**12.02.2014 Patentblatt 2014/07**

(73) Patentinhaber: **Grundfos Holding A/S**
**8850 Bjerringbro (DK)**

(72) Erfinder: **Kallesøe, Carsten Skovmose**
**8800 Viborg (DK)**

(74) Vertreter: **Patentanwälte Vollmann Hemmer Lindfeld**
**Partnerschaft mbB**
**Wallstraße 33a**
**23560 Lübeck (DE)**

(56) Entgegenhaltungen:
**EP-A1- 2 196 678**          **WO-A1-2005/085772**
**DE-A1-102007 010 768**     **GB-A- 2 313 197**
**US-A- 4 108 574**          **US-A1- 2003 129 062**
**US-A1- 2004 064 292**      **US-A1- 2005 031 443**

• **None**

**Beschreibung**

Die Erfindung betrifft ein Verfahren zum Erfassen der Durchflussmenge einer Kreiselpumpe, bei dem die Durchflussmenge anhand der Drehzahl der Pumpe, einer hydraulischen Größe der Pumpe und einer elektrischen Größe des Antriebsmotors der Pumpe ermittelt wird.

Bei Kreiselpumpen zählt es zum Stand der Technik innerhalb der Pumpe den Druck, den Differenzdruck und beispielsweise die Temperatur sensorisch zu erfassen. Da moderne Kreiselpumpen typischerweise mittels eines elektronischen Frequenzumrichters gesteuert sind, stehen darüber hinaus die elektrischen Größen des Antriebsmotors wie Leistung und Drehzahl ohnehin zur Verfügung, wobei letztere auch unproblematisch sensorisch zu erfassen ist. Aufwändiger hingegen ist die Durchflussmessung, da mechanische Durchflussmesser kostenaufwändig und störanfällig sind, elektronische Erfassungssysteme sind hingegen recht kostenintensiv und daher insbesondere für Pumpen kleinerer und mittlerer Bauart wenig geeignet.

Grundsätzlich kann die Durchflussmenge einer Kreiselpumpe drehzahlabhängig bestimmt werden und zwar wahlweise mit einem hydraulischen Pumpenmodell, welches in Abhängigkeit der Drehzahl und der Förderhöhe die Durchflussmenge angibt oder mit Hilfe eines elektrischhydraulischen Models, bei welchem in Abhängigkeit der Drehzahl und der Antriebsleistung die Durchflussmenge bestimmt wird. Ersteres Modell hat allerdings den Nachteil, dass es im Bereich geringer Fördermengen ungenaue oder nicht eindeutige Durchflussmengenergebnisse bringt. Letzteres ist hingegen zur Bestimmung großer Durchflussmengen ungeeignet, da es bei hoher elektrischer Leistung ungenaue oder nicht eindeutige Ergebnisse liefert.

Es zählt daher zum Stand der Technik diese Verfahren zu kombinieren, wobei für den Bereich kleiner Fördermengen das elektrisch-hydraulische Modell und für den Bereich großer Fördermengen das hydraulische Pumpenmodell herangezogen wird. Dies führt allerdings dazu, dass in dem Bereich, in dem von dem einen Verfahren auf das andere Verfahren gewechselt wird und umgekehrt, Sprünge entstehen können, welche unerwünscht sind. Weiterhin kann es passieren, dass sich die Bereiche überschneiden oder eine Lücke haben. Dies kann zu Schwingungsproblemen führen und ist insgesamt ungünstig.

Aus US 7,454,986 B2 zählt es zum Stand der Technik, den Durchfluss anhand elektrischer Größen des Motors zu bestimmen, wobei die Durchflussmenge anhand tabellarisch hinterlegter Werte anhand der Phasenverschiebung zwischen Versorgungsspannung und Back-EMF bestimmt wird.

Aus EP 1 721 131 B1 zählt es zum Stand der Technik, den Durchfluss mittels beider vorgenannter Verfahren zu bestimmen, wobei die Ermittlung anhand tabellarisch hinterlegter Werte erfolgt.

Aus GB 2 313 197 A zählt es zum Stand der Technik, die Durchflussmenge anhand des Pumpendrucks, also der Förderhöhe, der Leistung oder dem Wirkungsgrad zu bestimmen. Für die Bereiche, in welchem eine dieser Bestimmungsarten zu ungenauen oder mehrdeutigen Ergebnissen führt, ist dann eines der anderen Modelle zu benutzen oder die Durchflussmenge durch Mittelwertbildung von zwei Verfahren zu ermitteln.

Aus US 2003/0129062 A1 zählt es zum Stand der Technik, anhand der Drehzahl und des Drehmoments des Motors zu überprüfen, ob die Pumpe in einem hydraulisch effektiven Bereich oberhalb eines minimalen Durchflusses und unterhalb eines maximalen Durchflusses läuft. Eine 5 Bestimmung der Durchflussmenge ist hierbei nicht vorgesehen.

Aus US 4,108,574 A zählt es zum Stand der Technik, den Durchfluss der Pumpe rechnerisch zu ermitteln, wobei Drucksensoren saugseitig und druckseitig der Pumpe vorgesehen sind und die Drehzahl und die Antriebsleistung des Elektromotors zur Ermittlung des Durchflusses herange 10 zogen werden. Die Ermittlung des Durchflusses erfolgt anhand von Gleichungen, deren Ergebnis interpoliert werden muss. Eine Durchflussberechnung ist daher nur in den Bereichen möglich, in denen mit unterschiedlichen Modellen etwa gleiche Durchflüsse ermittelt werden. Eine Durchflussbestimmung ist somit in kritischen Bereichen, in denen keine 15 eindeutige Zuordnung gegeben ist, nicht möglich.

Vor diesem Hintergrund liegt der Erfindung die Aufgabe zugrunde, ein gattungsgemäßes Verfahren zum Erfassen der Durchflussmenge einer Kreiselpumpe so auszubilden, dass ohne zusätzliche Sensorik mit einfachen technischen Mitteln eine möglichst genaue Durchflussmengenerfassung über den gesamten Drehzahlbereich der Pumpe erfolgt.

Diese Aufgabe wird gemäß der Erfindung durch ein Verfahren mit den in Anspruch 1 angegebenen Merkmalen gelöst. Vorteilhafte Ausgestaltungen der Erfindung sind in den Unteransprüchen, der nach nachfolgenden Beschreibung und der Zeichnung angegeben.

Das erfindungsgemäße Verfahren zum Erfassen der Durchflussmenge einer Kreiselpumpe erfasst die Drehzahl der Pumpe, eine hydraulische Größe der Pumpe und eine elektrische Größe des Antriebsmotors der Pumpe. Dabei wird gemäß der Erfindung eine von der Durchflussmenge abhängige Größe mittels einer mathematischen Verknüpfung von Gliedern von Gleichungen, welche die physikalischen Zusammenhänge von Pumpe und Antriebsmotor beschreiben, ermittelt, von welchen ein Glied die Drehzahl der Pumpe und eine hydraulische Größe der Pumpe beinhaltet und ein anders Glied eine elektrische Größe des Antriebsmotors der Pumpe und die Drehzahl der Pumpe beinhaltet. Die Durchflussmenge wird dann anhand eines funktionalen Zusammenhangs zwischen der Durchflussmenge und der abhängigen Größe bestimmt.

Grundgedanke der vorliegenden Erfindung ist es, durch geeignete Wahl und Verknüpfung solcher Gleichungsglieder eine Hilfsgröße zu erzeugen bzw. eine Hilfsfunktion zu erzeugen, welche in einem eindeutigen und linearen Zusammenhang mit der Durchflussmenge steht und darüber letztlich die Durchflussmenge zu bestimmen. Dabei wird vorteilhafterweise durch Iterationsverfahren, die weiter unten noch beschrieben sind, die tatsächliche Durchflussmenge recht genau ermittelt, ohne dass es der Erfassung weiterer Größen bedarf. Das erfindungsgemäße Verfahren führt also mit den gegebenen Größen zu einer im Vergleich zum Stand der Technik eindeutigen und genaueren Ermittlung des aktuellen Durchflusses durch die Pumpe.

Erfindungsgemäß wird dabei als abhängige Größe eine Größe y gewählt, die durch die Gleichung

$$Y = -a * \frac{H}{n} + b * \frac{P}{n^2}$$

bestimmt ist und in der a und b zu bestimmende Konstanten, H die Förderhöhe, P die elektrische Leistung des Antriebsmotors und n die Drehzahl sind. Bei dieser Gleichung handelt es sich um die subtraktive Verknüpfung von zwei Gliedern, nämlich einem Glied, welches die elektrische Größe in Form der Leistung des Antriebsmotors der Pumpe und die Drehzahl beinhaltet und ein anderes Glied, welches eine hydraulische Größe, nämlich die Förderhöhe und die Drehzahl der Pumpe beinhaltet. Die vorgenannte abhängige Größe ist rechnerisch einfach zu bestimmen und steht im linearen Zusammenhang mit der Durchfluss- und Fördermenge.

Als hydraulische Größe wird eine Druckgröße, insbesondere der Druck am Ausgang der Pumpe (auch als Förderhöhe bezeichnet) oder der Differenzdruck zwischen Eingang und Ausgang der Pumpe gewählt. Die Druck- bzw. Differenzdruckmessung bei Pumpen gehört heutzutage selbst bei Pumpen kleiner Leistung schon zum Standard. Derartige Druck- oder Differenzdrucksensoren können kostengünstig hergestellt und innerhalb der Pumpe verbaut werden.

Als elektrische Größe hat es sich als vorteilhaft erwiesen, die aufgenommene Leistung P des Antriebsmotors heranzuziehen, die über die elektronische Steuerung des Frequenzumrichters in der Regel ohne weiteres verfügbar ist.

Besonders günstig ist es, wenn die Wahl der Glieder, deren Anzahl und deren mathematische Verknüpfung so gewählt wird, dass eine monotone Funktion der Durchflussmenge über den Arbeitsbereich der Pumpe gebildet ist, da dann eine eindeutige und mathematisch gut zuordnungsbare Durchflussmenge zu der abhängigen Größe besteht. Die Durchflussmenge kann gemäß der Erfindung auch anhand einer abhängigen Größe Y bestimmt werden, welche eine subtraktive Verknüpfung von drei Gliedern darstellt:

$$Y = -a * \frac{H}{n} + b * \frac{P}{n^2} - c * n$$

wobei c eine zu bestimmende Konstante ist.

Dabei hat es sich als vorteilhaft erwiesen, das die Durchflussmenge repräsentierende Signal durch einen Tiefpass zu leiten, damit diese höherfrequenten Störsignale, welche auf die Durchflussmenge praktisch keinerlei Einfluss haben, eliminiert werden.

Gemäß der Erfindung wird die ermittelte abhängige Größe Y mit einer durch eine Modellrechnung ermittelten entsprechenden abhängigen Größe $y_{est}$ verglichen und dieses Verfahren durch Variation einer angenommenen Durch-flussmenge $Q_{est}$ wiederholt bis eine Fehlergröße y - $y_{est}$ derart klein ist, dass die angenommene Durchflussmenge $Q_{est}$ der tatsächlichen Durchflussmenge Q entspricht. Dieses Iterationsverfahren erlaubt es, die Durchflussmenge mit hoher Genauigkeit zu bestimmen, jedenfalls wesentlich genauer als dies bei einem tabellarischen Vergleich vorab ermittelter Werte erfolgen kann. Dabei ist es besonders vorteilhaft, wenn auch für die Modellrechnung die Drehzahl eine Eingangsgröße bildet, da die Drehzahl die Größe ist, welche am einfachsten und mit hoher Genauigkeit ermittelt werden kann.

Vorteilhaft wird das vorbeschriebene Verfahren zur Erfassung der Durchflussmenge der Pumpe mittels einer elektronischen Steuerung ausgeführt, welche Teil der Kreiselpumpe mit ihrem elektrischen Antriebsmotors und einem Druck oder Differenzdrucksensor bildet. Eine solche Ausbildung hat den Vorteil, dass innerhalb des Kreiselpumpenaggregats die Durchflussmenge unabhängig von äußeren Sensoren zur Verfügung steht, also pumpenautark ermittelt werden kann. Dies wiederum kann zu Überwachungszwecken der Pumpe dienen aber auch zur Steuerung der Pumpe aber auch zur Steuerung externer Vorgänge.

Vorteilhaft weist eine solche elektronische Steuerung eine Observerbasierte Regelung auf, um auf diese Weise eine hohe Genauigkeit der ermittelten Ergebnisse zu realisieren.

Die Erfindung ist nachfolgend von Kurvenverläufen und Blockdiagrammen näher erläutert. Es zeigen:

Fig. 1     die Abhängigkeit von Durchflussmenge und Förderhöhe bei zwei unterschiedlichen Drehzahlen einer Kreiselpumpe,

Fig. 2    die Abhängigkeit von Durchflussmenge und Leistungsaufnahme der Pumpe aus Fig. 1 bei vergleichbaren Drehzahlen,

Fig. 3    die Abhängigkeit von Durchflussmenge und Förderhöhe bei zwei unterschiedlichen Drehzahlen einer Kreiselpumpe mit instabiler Kennlinie,

Fig. 4    die Abhängigkeit von Durchflussmenge und Leistungsaufnahme der Pumpe aus Fig. 3 bei vergleichbaren Drehzahlen,

Fig. 5    die Abhängigkeit einer abhängigen Größe Y zur Durchflussmenge Q bei zwei unterschiedlichen Drehzahlen,

Fig. 6    ein Blockschaltbild einer ersten Ausführung des erfindungsgemäßen Verfahrens,

Fig. 7    ein Blockschaltbild einer zweiten nicht zur Erfindung gehörenden Ausführung des Verfahrens,

Fig. 8    ein Blockschaltbild einer alternativen und nicht zur Erfindung gehörenden Ausführung des Verfahrens,

Fig. 9    ein Blockschaltbild einer weiteren und nicht zur Erfindung gehörenden Ausführung eines Verfahrens,

Fig. 10    ein Blockschaltbild des Verfahrens, bei dem die abhängige Größe aus drei Gliedern gebildet ist und

Fig. 11    ein Blockschaltbild eines abgewandelten Verfahrens nach Fig. 11.

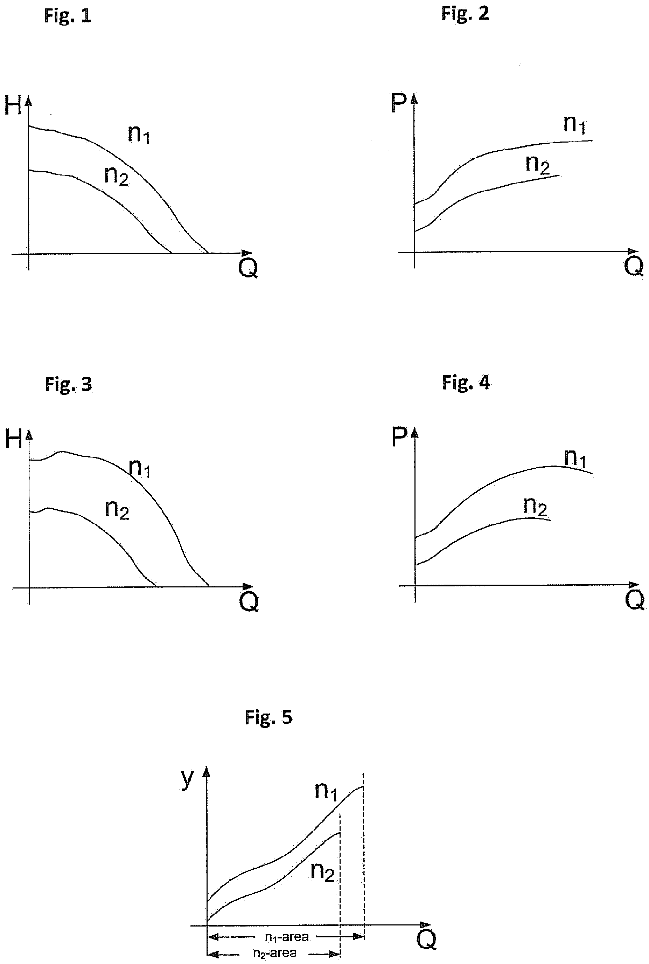

Anhand der Figuren 1 und 2 ist beispielhaft für zwei Drehzahlen der funktionale Zusammenhang zwischen der Förderhöhe (Förderdruck) und der Durchflussmenge (Fördermenge) Q anhand von Fig. 1 und der aufgenommenen Leistung P und Durchflussmenge Q anhand von Fig. 2 einer Kreiselpumpe dargestellt. Wie die Kurvenverläufe verdeutlichen, sind in Fig. 1, also im HQ-Diagramm bei geringen Durchflussmengen die Kurven recht flach, wohingegen sie in Fig. 2 in PQ-Diagramm diese gerade zu großen Durchflussmengen hin flach werden. Dort, wo die Kurven flach sind, ist die Bestimmung der Durchflussmenge schwierig und in der Praxis meist ungenau. Dieses Problem verstärkt sich noch bei Pumpen mit instabiler Kennlinie, wie dies die vergleichbaren Diagramme der Figuren 3 und 4 verdeutlichen. So sind in Fig. 3 bei konstanter Drehzahl $n_1$ zwei Förderhöhen H zu finden, welchen unterschiedliche Durchflussmengen Q zugeordnet sind. Das gleiche ergibt sich in Fig. 4. Bei solchen Pumpen ist also die Fördermengenbestimmung nur anhand eines HQ- oder eines PQ-Diagramms nicht nur ungenau, sondern aufgrund mangelnder Eindeutigkeit in einigen Bereichen gar nicht möglich.

Die vorliegende Erfindung löst dieses Problem dadurch, dass eine von der Durchflussmenge abhängige Größe, die hier beispielhaft Y genannt wird, durch mathematische Verknüpfung von Gliedern von Gleichungen, welche die physikalischen Zusammenhänge von Pumpe und Antriebsmotor beschreiben, ermittelt wird. Dabei ist um den eingangs geschilderten Problemen aus dem Wege zu gehen, die Wahl der Glieder von Gleichungen, welche die physikalischen Zusammenhänge von Pumpe und Antriebsmotor beschreiben, so dass ein Glied die Drehzahl der Pumpe und eine hydraulische Größe der Pumpe beinhaltet und ein anderes Glied eine elektrische Größe des Antriebsmotors der Pumpe und die Drehzahl der Pumpe beinhaltet. Diese Glieder spiegeln also zumindest teilweise die vorbeschriebenen Diagramme nach den Figuren 1 und 2 bzw. 3 und 4 wieder. Durch geeignete mathematische Verknüpfung dieser Glieder, welche Teile der entsprechenden Pumpen-/Motormodelle sind, kann eine sogenannte Hilfsgröße, nämlich eine von der Durchflussmenge abhängige Größe Y gebildet werden, welche in einem funktionalen Zusammenhang mit der Durchflussmenge steht, und zwar nach Möglichkeit in solchem Zusammenhang, dass eine eindeutige, gut differenzierbare Zuordnung zur Durchflussmenge in jedem Punkt des Arbeitsbereiches der Pumpe möglich ist. Eine solche Größe Y ist erfindungsgemäß wie folgt gebildet:

$$Y = -a * \frac{H}{n} + b * \frac{P}{n^2} \qquad \text{(Gleichung 1)}$$

In dieser Gleichung sind a und b zu bestimmende Konstanten, H die Förderhöhe bzw. der Förderdruck, P die elektrische Leistung des Antriebsmotors und n die Drehzahl von Pumpe und Motor. Diese Größe beinhaltet also Förderhöhe und Drehzahl und ein zweites Glied, welches Leistung und Drehzahl beinhaltet.

Der funktionale Zusammenhang dieser Größe Y zur Durchflussmenge ergibt sich aus folgender Gleichung:

$$Y = k_2 * \frac{Q^2}{n} + k_1 * Q + k_0 * n \qquad \text{(Gleichung 2)}$$

Diese Gleichung ist Ausfluss aus den bekannten physikalischen Zusammenhängen von Motor und Pumpe, wobei die Konstanten $k_2$, $k_1$, und $k_0$ in an sich bekannter Weise vorab bestimmt werden. Dieser funktionale Zusammenhang ist schematisch anhand von Fig. 5 dargestellt. Wie diese Figur verdeutlicht, ergibt sich hieraus eine eindeutige Zuordnung zwischen Y und Q, d. h. zwischen der ermittelten Größe und der zu bestimmenden Durchflussmenge in Abhängigkeit der jeweiligen Drehzahl.

Um nun bei ermitteltem Y die Durchflussmenge zu bestimmen, ist es vorgesehen, ein Iterationsverfahren anzusetzen, bei welchem in die Gleichung 2 bei bekannter Drehzahl (n) eine geschätzte Durchflussmenge $Q_{est}$ eingegeben wird, woraus eine Größe $Y_{est}$ ermittelt wird. Dabei wird die Größe $Q_{est}$, welche in die Gleichung 2 eingesetzt wird, solange verändert bis $Y_{est} = Y$, d. h. gleich der anhand der Gleichung 1 ermittelten Größe ist. Wenn dies der Fall ist und die Differenz zwischen Y und $Y_{est}$ gleich 0 ist, dann entspricht die geschätzte Durchflussmenge $Q_{est}$ der tatsächlichen Durchflussmenge Q. Dieses Verfahren ist zum einen mit geringem Rechenaufwand möglich und weist zum anderen eine hohe Genauigkeit auf, wobei typischerweise sensorisch nur ein Wert, nämlich der Förderdruck bzw. die Förderhöhe oder der Differenzdruck zwischen Ein- und Ausgang der Pumpe ermittelt werden muss, wohingegen die Drehzahl und die elektrische Leistung steuerelektronikseitig ohnehin zur Verfügung stehen. Durch die geeignete Wahl der Glieder und geeignete Wahl der mathematischen Verknüpfung, wird eine Hilfsgröße Y ermittelt, zu welcher die Durchflussmenge Q in einfacher aber eindeutiger Weise ermittelt werden kann, ohne dass die beim Stand der Technik eingangs geschilderten Nachteile auftreten.

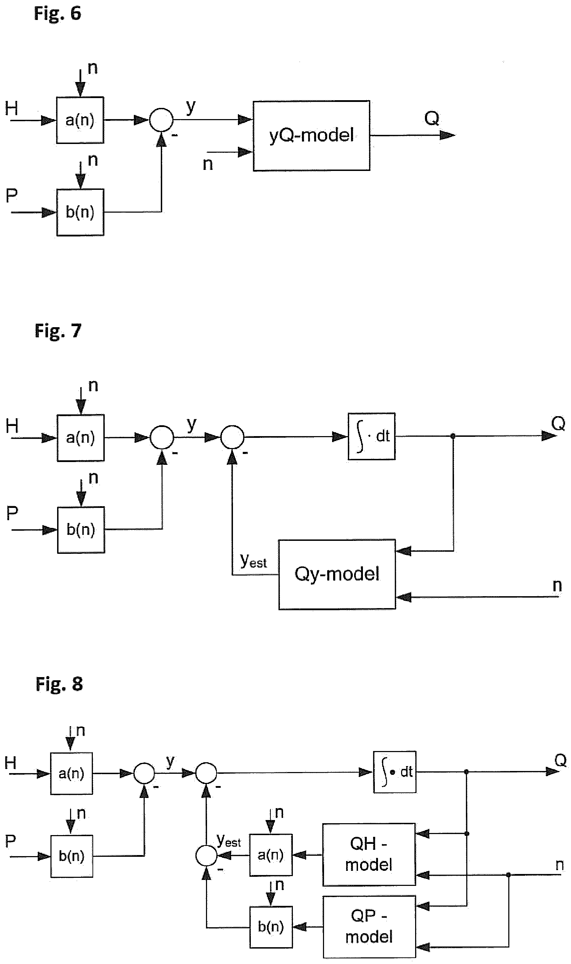

Das vorbeschriebene Ausführungsbeispiel, bei welchem ein Glied die Förderhöhe und die Drehzahl, ein anderes Glied die elektrische Leistung und die Drehzahl aufweisen und subtraktiv zur Größe Y verknüpft sind, um dann mittels eines YQ-Models unter Verwendung der aktuellen Drehzahl zur Ermittlung der Durchflussmenge verknüpft zu werden, ist anhand von Fig. 6 schematisch dargestellt.

Fig. 7 zeigt eine nicht zur Erfindung gehörige Weiterbildung des anhand von Fig. 6 dargestellten Verfahrens dahingehend, dass über die Differenz zwischen dem durch Messung ermittelten Y und dem durch anfängliche Schätzung ermittelten $Y_{est}$ eine Integration, d. h. eine Aufsummierung über die Zeit erfolgt, die dann unmittelbar die Durchflussmenge Q angibt. Auch hier schließt in das QY-Model die Drehzahl als Eingangsgröße sowie die über die Zeit integrierte Differenz $Y_{est}$ ein.

Anhand von Fig. 8 ist dargestellt, wie anhand der Größe Y mittels eines hydraulischen Pumpenmodels (QH-Modell) sowie eines elektrisch hydraulischen Motor-/Pumpenmodels (QP-Modell) die Glieder und damit ein $Y_{est}$ ermittelt wird, das dann wiederum mit dem gemessenen und errechneten Wert Y subtraktiv verknüpft wird, um dann im Weiteren durch Integration in analoger Weise wie bei dem anhand von Fig. 7 vorbeschriebenen Ausführungsbeispiel die Durchflussmenge zu bestimmen.

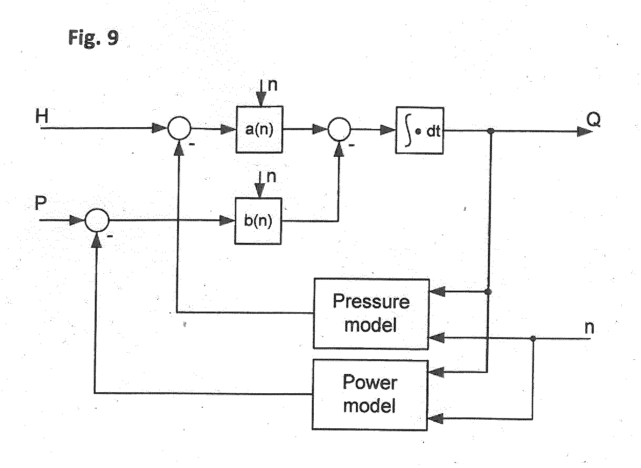

Anhand von Fig. 9 ist schematisch dargestellt, dass die mathematische Verknüpfung zwischen den gemessenen Größen H und P mit dem zwecks Iterationsverfahren geschätzten Größen auch bereits in die Berechnung von Y mit einfließen kann.

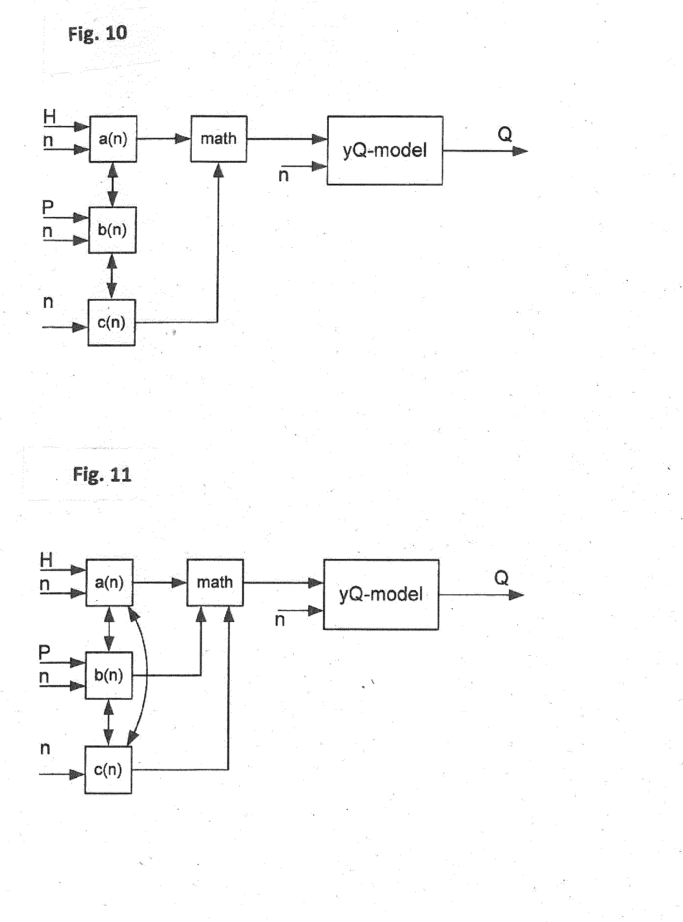

Anhand von Fig. 10 ist eine Hilfsgröße bestehend aus drei Gliedern dargestellt, die jeweils durchflussmengenabhängig sind. Dabei können die Glieder vor ihrer mathematischen Verknüpfung auch untereinander verknüpft, d. h. voneinander abhängig sein, wie dies bei der im Ausführungsbeispiel gemäß Fig. 11 durch den Doppelpfeil zwischen a(n) und c(n) angedeutet ist.

**Patentansprüche**

**1.** Verfahren zum Erfassen der Durchflussmenge einer Kreiselpumpe, bei dem die Durchflussmenge anhand der Drehzahl der Pumpe und einer hydraulischen Größe der Pumpe und einer elektrischen Größe eines Antriebsmotors der Pumpe ermittelt wird, **dadurch gekennzeichnet, dass** eine von der Durchflussmenge abhängige Größe Y mittels einer mathematischen Verknüpfung von Gliedern von Gleichungen, welche die physikalischen Zusammenhänge von Pumpe und Antriebsmotor beschreiben, ermittelt wird, von welchen ein Glied die Drehzahl der Pumpe und eine hydraulische Größe der Pumpe beinhaltet und ein anderes Glied eine elektrische Größe des Antriebsmotors der Pumpe und die Drehzahl der Pumpe beinhaltet, wobei die abhängige Größe Y durch die Gleichung

$$Y = -a * \frac{H}{n} + b * \frac{P}{n^2}$$

oder durch die Gleichung

$$Y = -a * \frac{H}{n} + b * \frac{P}{n^2} + c * n$$

bestimmt ist, in der a und b zu bestimmende Konstanten, H die Förderhöhe, P die elektrische Leistung des Antriebsmotors, n die Drehzahl und c eine zu bestimmende Konstante ist, wobei die Durchflussmenge dann anhand eines funktionalen Zusammenhangs zwischen der Durchflussmenge und der abhängigen Größe Y bestimmt wird, in dem die ermittelte abhängige Größe Y mit einer entsprechenden, jedoch durch eine Modellrechnung ermittelten abhängigen Größe $y_{est}$ verglichen wird und dieses Verfahren durch Variation einer angenommenen Durchflussmenge $Q_{est}$ wiederholt wird bis eine Fehlergöße y - $y_{est}$ derart klein ist, dass die angenommene Durchflussmenge $Q_{est}$ der tatsächlichen Durchflussmenge Q entspricht, wobei die durch die Modellrechnung ermittelte abhängige Größe $y_{est}$ aus der Gleichung

$$yest = k_2 * \frac{Qest^2}{n} + k_1 * Qest + k_0 * n$$

bestimmt wird, in der $y_{est}$ die abhängige Größe ist, k2, k1 und k0 Konstanten, $Q_{est}$ die angenommene Durchflussmenge und n die Drehzahl sind.

2. Verfahren nach Anspruch 1, **dadurch gekennzeichnet, dass** das die Durchflussmenge repräsentierende Signal mit einem Tiefpass gefiltert wird.

3. Kreiselpumpe mit einem elektrischen Antriebsmotor, mit einem Druck- oder Differenzdrucksensor und mit einer elektronischen Steuerung, **dadurch gekennzeichnet, dass** die elektronische Steuerung zur Ausführung des Verfahren nach einem der vorhergehenden Ansprüche ausgebildet ist.

4. Kreiselpumpe nach Anspruch 3, **dadurch gekennzeichnet, dass** die elektronische Steuerung eine observer-basierte Regelung aufweist.

**Claims**

1. A method for detecting the flow rate of a centrifugal pump, with which the flow rate is determined by way of the rotation speed of the pump and a hydraulic variable of the pump and an electrical variable of the drive motor of the pump, **characterised in that** a variable Y which is dependent on the flow rate is determined by way of a mathematic linking of terms of equations describing physical relations of the pump and drive motor, of which one term contains the rotation speed of the pump and a hydraulic variable of the pump and another term contains an electrical variable of the drive motor of the pump and the rotational speed of the pump, wherein the dependent variable Y is determined by way of the following equation

$$Y = -a * \frac{H}{n} + b * \frac{P}{n^2}$$

or by the equation

$$Y = -a * \frac{H}{n} + b * \frac{P}{n^2} - c * n$$

in which a and b are constants to be determined, H the delivery head, P the electrical power of the drive motor, n the rotational speed and c is a constant to be determined, wherein the flow rate is then determined by way of a functional relation between the flow rate and the dependent variable Y by way of the determined dependent variable Y being compared to a corresponding dependent variable $y_{est}$ but one which is determined by way of model computation, and this method is repeated by way of variation of an assumed flow rate $Q_{est}$, until an error variable y -

$y_{est}$ is small to the extent that the assumed flow rate $Q_{est}$ corresponds to the actual flow rate Q, wherein the dependent variable $y_{est}$ which is determined by the model computation is determined from the equation

$$yest = k_2 * \frac{Qest^2}{n} + k_1 * Qest + k_0 * n$$

in which yest is the dependent variable, k2, k1 and k0 constants, $Q_{est}$ the assumed flow rate and n the rotation speed.

2. A method according to claim 1, **characterised in that** the signal representing the flow rate is filtered with a low-pass filter.

3. A centrifugal pump with an electric drive motor, with a pressure sensor or differential pressure sensor and with an electronic control, **characterised in that** the electronic control is designed for carrying out the method according to one of the preceding claims.

4. A centrifugal pump according to claim 3, **characterised in that** the electronic control has an observer-based closed-loop control.

## Revendications

1. Procédé de détection du débit d'une pompe à centrifuge, dans lequel le débit est déterminé à l'aide de la vitesse de rotation de la pompe et d'une grandeur hydraulique de la pompe et d'une grandeur électrique d'un moteur d'entraînement de la pompe, **caractérisé en ce qu'**une grandeur Y dépendant du débit est déterminée au moyen d'une relation mathématique d'éléments d'équations, lesquels décrivent les rapports physiques de la pompe et du moteur d'entraînement, parmi lesquels un élément contient la vitesse de rotation de la pompe et une grandeur hydraulique de la pompe et un autre élément contient une grandeur électrique du moteur d'entraînement de la pompe et la vitesse de rotation de la pompe, dans lequel la grandeur Y dépendante est définie par l'équation

$$Y = -a * \frac{H}{n} + b * \frac{P}{n^2}$$

ou par l'équation

$$Y = -a * \frac{H}{n} + b * \frac{P}{n^2} + c * n$$

dans laquelle a et b sont des constantes à déterminer, H la hauteur de refoulement, P la puissance électrique du moteur d'entraînement, n la vitesse de rotation et c une constante à déterminer, dans lequel le débit est ensuite défini à l'aide d'un rapport fonctionnel entre le débit et la grandeur Y dépendante, dans lequel la grandeur Y dépendante déterminée est comparée avec une grandeur $y_{est}$ dépendante correspondante mais déterminée par un modèle de calcul et ce procédé est répété par variation d'un débit supposé $Q_{est}$ jusqu'à ce qu'une grandeur d'erreur y - $y_{est}$ soit aussi petite que le débit supposé $Q_{est}$ correspond au débit Q réel, dans lequel la grandeur $y_{est}$ dépendante déterminée par le modèle de calcul est définie à partir de l'équation

$$yest = k_2 * \frac{Qest^2}{n} + k_1 * Qest + k_0 * n$$

dans laquelle $y_{est}$ est la grandeur dépendante, k2, k1 et k0 sont des constantes, $Q_{est}$ le débit supposé et n la vitesse de rotation.

2. Procédé selon la revendication 1, **caractérisé en ce que** le signal représentant le débit est filtré avec un filtre passe-bas.

3. Pompe à centrifuge avec un moteur d'entraînement électrique, avec un capteur de pression ou de pression différentielle et avec une commande électronique, **caractérisée en ce que** la commande électronique est réalisée pour l'exécution du procédé selon l'une quelconque des revendications précédentes.

4. Pompe à centrifuge selon la revendication 3, **caractérisée en ce que** la commande électronique présente une régulation basée sur l'observateur.

**Fig. 1**

**Fig. 2**

**Fig. 3**

**Fig. 4**

**Fig. 5**

**Fig. 6**

**Fig. 7**

**Fig. 8**

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7454986 B2
- EP 1721131 B1
- GB 2313197 A
- US 20030129062 A1
- US 4108574 A